# EUROPEAN PATENT SPECIFICATION

(11) **EP 1 295 569 B1**
(45) Date of publication and mention of the grant of the patent: **11.10.2006**
(21) Application number: 02380194.7
(22) Date of filing: 18.09.2002
(51) Int. Cl.: A61C 3/00, A61C 19/00

(54) **Element for aiding in the cementation of fixed dental prosthesis**
Hilfselement zur Zementierung von festsitzendem Zahnersatz
Element pour faciliter le collage de prothèses dentaires fixes

(30) Priority: 19.09.2001 ES 200102098
(43) Date of publication of application: 26.03.2003
(73) Proprietor: Corporacion O.I.B., S.L., 09003 Burgos (ES)
(72) Inventor: Rodriguez Del Val, Jose, 09003 Burgos (ES)
(74) Representative: Urizar Anasagasti, Jesus Maria

(56) References cited:
- US-A- 3 722 101
- US-A- 4 541 803
- US-A- 4 657 509

## Description

The present invention refers to an element for aiding in fixing fixed tooth-borne base dental bridges or prostheses by means of the simple effect of biting it, such that both dental arcades exert pressure on it and the latter on the bridge, aiding in its fixing.

D1 document: US-A-3722101 (VIA v), of March 27, 1973 describes a "mouth-opener" that as its name suggests, serves to keep the patient's mouth open while you are working in it; it is about a rigid non-flexible element that is common among dentists.

During the cementation process of fixed dental bridges, the expert has used cylindrical shaped cotton blocks up to now, which are manufactured for other needs (to absorb the saliva), but they are not very suitable for this specific use.

As the dental arcades are connected at a rear point, they open in an angle and consequently, when biting a cylindrical element, the pressure is greater in the distal or rear part than in the mesial or front part, which usually causes the bridge to tilt, a problem suitably solved by the present invention.

The element according to claim 1 herein proposed comprises a block elongated in wedge formation, of a circular or polygonal section, being thicker on one end than on the other, in order to be adapted between the two dental arcades, the thickest part being arranged towards the front area and the thinnest towards the inside of the mouth.

This simple element has a frustropyramidal or frustroconical shape. Both alternatives also permit shaping an element with a generatri that is not straight, that is to say stepped and also shaping the outer surface in the frustroconical alternative in a helical shape, such that this element is constructed as from a strip of cotton wrapped in successive concentric layers with a higher number on one end than on the other in order to finally provide it with this shape.

This element is disposable and is preferably made of rubber, natural or artificial, neoprene, cotton or any other product of similar features.

These and other features of the present invention will be more easily understood with the following description carried out on the basis of a series of embodiment examples; this description is carried out on the basis of the drawings of the attached plans in which:

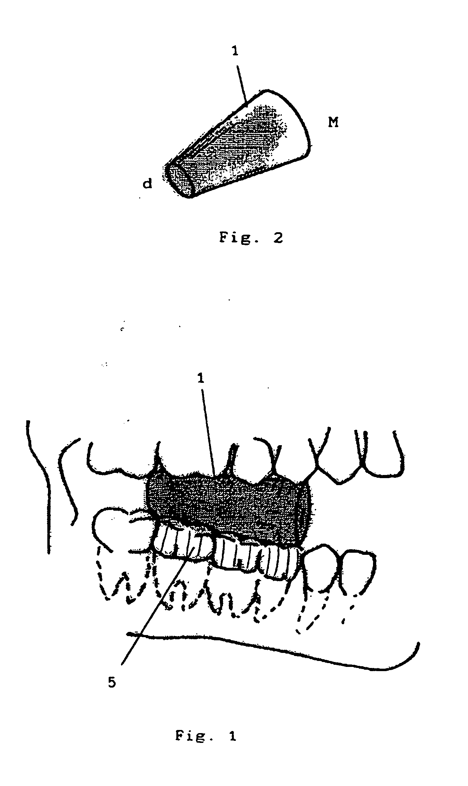

Figure 1 schematically shows the jaw of a patient when biting an element to aid in the cementation of a fixed dental prosthesis.
Figures 1 to 4 schematically show different embodiment variants of this element.

The object of the present invention is constituted by an element that, upon being bitten by a patient after placing a fixed dental prosthesis (5), aids in its cementation by exerting equal pressure in both the distal and mesial part.

This element comprises a block elongated in wedge formation, which is thicker on one end (M) than on the other (d), thus being adapted between the two dental arcades by arranging the thickest end (M) in the mesial position, that is to say towards the front part of the mouth, and the thinner end (d) in the distal position, that is to say towards the most inner part of the mouth.

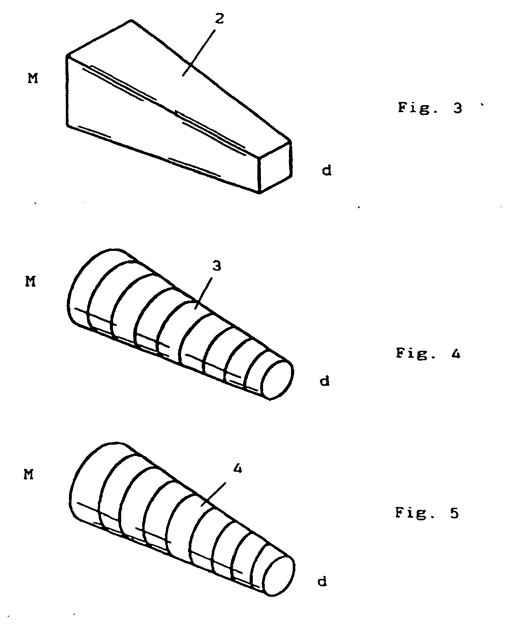

As can be seen in figure 2, this block 1 has preferably frustropyramidal shape, or, as shown in figure 3, it can also adopt a frustroconical shape (2), or any intermediate alternative.

Figure 4 shows a modification of figure 2, since it includes a frustroconical element whose generatrix is progressively stepped in a taper towards the distal area (d).

Finally, figure 5 shows a modification of the previous figure in which this stepping of the generatrix has an outer helical surface. This last embodiment permits manufacturing this element by means of a strip of cotton which is wrapped, forming successive concentric layers progressing towards the mesial area (M).

It is not considered necessary to extend this description so that any skilled person can understand the scope of the invention and the derived advantages thereof.

The terms with which this specification has been written must only be taken in a broad and non-limiting sense.

The materials, shape and arrangement of the elements are susceptible to variation as long as it does not imply an alteration of the essential features of the invention, which are claimed below:

## Claims

1. An element for aiding in the cementation of fixed dental prosthesis, comprising a soft block, which can be introduced between the dental arcades and can, upon biting on it, exert pressure on the bridge or prosthesis (5) in order to aid in its cementation, **characterized in that** said block (1) is an elongated and in wedge formation element, being thicker on the mesial end (M) to be arranged towards the outside of the mouth, than on the distal end (D) to be placed towards the deepest part of the mouth.

2. An element according to claim 1, **characterized in that** this element is disposable and is preferably made of rubber, natural or artificial, neoprene, cotton or any other product of similar features.

3. An element according to claims 1 and 2, **characterized in that** the block (2) which shapes it has a frustropyramidal shape, of topped off edges.

4. An element according to claims 1 and 2, **characterized in that** the block (3) which shapes it has a frustroconical shape of a stepped generatrix.

5. An element according to claims 1 and 2, **characterized in that** the block of cotton(4) which shapes it has an outer, helically shaped surface.

## Patentansprüche

1. Element zur Unterstützung beim Zementieren fester Zahnprothesen, wobei dieses einen weichen Block (2) umfasst, der zwischen die Zahnbögen eingeführt werden kann und der beim darauf Beißen auf die Brücke oder Prothese (5) drücken kann, um das Zementieren zu unterstützen, **dadurch gekennzeichnet, dass** der genannte Block (1) ein längliches und keilförmiges Element ist, das am mesialen Ende (M), das im Mund nach außen gerichtet anzuordnen ist, dicker ist als am distalen Ende (d), das zum tieferen Teil des Mundes hin auszurichten ist.

2. Element nach Anspruch 1, **dadurch gekennzeichnet, dass** dieses Element ein Einwegartikel ist und vorzugsweise aus natürlichem oder künstlichem Gummi, Neopren, Baumwolle oder einem anderen Produkt ähnlicher Merkmale hergestellt wird.

3. Element nach den Ansprüchen 1 und 2, **dadurch gekennzeichnet, dass** der Block (2), aus dem dieses besteht, einen rechteckigen Querschnitt aufweist und pyramidenstumpfförmig mit abgerundeten Kanten ausgebildet ist.

4. Element nach den Ansprüchen 1 und 2, **dadurch gekennzeichnet, dass** der Block (3), aus dem dieses besteht, Kegelstumpfförmig mit einer abgestuften Mantellinie ausgebildet ist.

5. Element nach den Ansprüchen 1 und 2, **dadurch gekennzeichnet, dass** der Block (4) aus Baumwolle, aus dem dieses besteht, eine spiralförmig ausgebildete Außenfläche aufweist.

## Revendications

1. Elément pour aider au scellement de prothèses dentaires fixes, comprenant un bloque (2) souple, pouvant être introduit entre les arcades dentaires et qui peut, en le mordant, exercer une pression sur le pont ou la prothèse (5) pour aider à sa fixation, **caractérisé en ce que** ledit bloque (1) constitue un élément de forme élonguée et en clavette, plus épais sur l'extrémité mesiale (M) pour être ajusté vers l'extérieur de la bouche, que sur l'extrémité distale (D) pour être placé vers la partie la plus profonde de la bouche.

2. Elément selon la revendication 1, **caractérisé en ce que** cet élément est jetable et fabriqué de préférence en caoutchouc, naturel ou artificiel, néoprène, coton ou toute autre produit présentant des caractéristiques similaires.

3. Elément selon les revendications 1 et 2, **caractérisé en ce que** le bloque (2) qui le constitue présente une section rectangulaire et une configuration troncopyramidale aux arêtes finies.

4. Elément selon les revendications 1 et 2 **caractérisé en ce que** le bloque (3) qui le constitue présente une configuration tronconique de génératrice étagée.

5. Elément selon les revendications 1 et 2, **caractérisé en ce que** le bloque (4) en coton qui le constitue présente une surface extérieure hélicoïdalement conformée.
